# EUROPEAN PATENT APPLICATION

(11) **EP 1 903 309 A2**
(43) Date of publication of application: **26.03.2008**
(21) Application number: 07018402.3
(22) Date of filing: 19.09.2007
(51) Int. Cl.: G01C 21/36

(54) **Navigation system including auxiliary display**

(30) Priority: 19.09.2006 KR 20060090394
(71) Applicant: Reigncom Ltd., Gangnam-gu 135-739 Seoul (KR)
(72) Inventor: Choi, Moonkyu, Gangnam-gu Seoul (KR)
(74) Representative: Samson & Partner

(57) **Abstract**

The present invention is related to a vehicle navigation system including a main display providing navigation information comprising at least one of a vehicle location, a vehicle speed, a vehicle direction and a driving route for guiding a driver to a desired destination. The navigation system further includes an auxiliary display disposed at a side of the main display displaying a portion of the navigation information, and at least one input means formed on the auxiliary display for receiving a user input to control the vehicle navigation system.

## Description

### CROSS-REFERENCE TO RELATED APPLICATIONS

Pursuant to 35 U.S.C. § 119(a), this application claims the benefit of earlier filing date and right of priority to Korean Application No. 10-2006-0090394, filed on September 19, 2006, the contents of which are hereby incorporated by reference herein in their entirety.

### FIELD OF THE INVENTION

The present invention relates to a vehicle navigation system, and in particular to a vehicle navigation system capable of efficiently providing navigation information through an auxiliary display.

### BACKGROUND OF THE INVENTION

Conventionally, a vehicle navigation system searches for an optimized route between an origin and a destination using map data. When the optimized route is obtained, navigation to the destination is carried out by evaluating a current location of the vehicle to the map data, wherein the current location is attained via a Global Positioning System (GPS) satellite signal. Navigation information may be visually provided through a display screen, or audibly provided through a speaker, of the navigation system.

However, in accordance with a method for providing the navigation information through the conventional display screen, a vehicle driver is distracted because numerous information is provided though a small screen, thereby increasing the possibility of an accident. Additionally, when an operation command is inputted through an arrow key of the navigation system while in a navigation mode, the possibility of an accident is further increased because the arrow key being disposed separately from the screen causes the driver's field of vision to unsafely move a distance from the screen to the arrow key.

Furthermore, as information technology has developed, the navigation system has been provided with additional functions, such as video playback and digital multimedia broadcast reception through the display screen that a driver or passenger may benefit from in addition to the navigation functions. However, because the video playback or the digital multimedia broadcast reception is deactivated during navigation in conventional navigation systems, the passenger who is not interested in the navigation information is unable to utilize the other functions. Accordingly, attempts have been made to overcome this drawback. For example, a navigation system has been developed wherein the display screen is divided to provide a navigation screen and a screen for simultaneously displaying other functions or services. Another example includes a navigation system wherein the navigation information is provided by audio output only and the display screen displays the other functions or services.

However, with regard to dividing the display screen to display navigation information and other functions/services, map navigation information is provided on a small area of the divided screen. Hence, the driver is inconvenienced because reading the small area becomes difficult. With regard to providing the navigation information by audio output only, the navigation information is not continuously, but intermittently, provided. Thus, the driver is also inconvenienced because the driver is not given a continuous set of directions to follow while driving.

### SUMMARY OF THE INVENTION

The present invention is directed to a vehicle navigation system having an auxiliary display.

Additional features and advantages of the invention will be set forth in the description which follows, and in part Will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the present invention is embodied in a vehicle navigation system comprising a main display providing navigation information comprising at least one of a vehicle location, a vehicle speed, a vehicle direction and a driving route for guiding a driver to a desired destination, an auxiliary display disposed at a side of the main display displaying a portion of the navigation information, and at least one input means formed on the auxiliary display for receiving a user input to control the vehicle navigation system.

In one aspect of the invention, the vehicle navigation system further comprises a viewing angle adjusting means formed between the main display and the auxiliary display for adjusting an angle of the auxiliary display with respect to the main display. In another aspect of the invention, the auxiliary display comprises a driving direction indicator for indicating a direction to the driver. Preferably, the driving direction indicator indicates at least one of a left-turn direction, a right-turn direction, a go-straight direction, and a U-turn direction. Preferably, the auxiliary display displays a remaining distance to a point at which the driving route changes according to the driving direction indicator.

In a further aspect of the invention, the at least one input means comprises inputting means disposed along a circumference of the auxiliary display. Preferably, at least one of an upward direction, a downward direction, a left direction and a right direction can be inputted into the vehicle navigation system using the inputting means. Preferably, the auxiliary display displays a pictogram for visually displaying a menu when the navigation system is in a menu selection mode.

In one aspect of the invention, the main display displays non-navigation-related information when non-navigation functions are activated in the navigation system during a navigation mode. Preferably, the auxiliary display displays the portion of the navigation information when the non-navigation functions are activated in the navigation system during the navigation mode.

In another aspect of the invention, the auxiliary display comprises means for detachably attaching to the main display. Preferably, the main display comprises a receptacle for accommodating the attaching means of the auxiliary display. Preferably, the auxiliary display comprises a wireless communication interface for wirelessly communicating with the main display when detached. Preferably, the auxiliary display comprises a storage for storing data.

In accordance with another embodiment of the present invention, a vehicle navigation system comprises a vehicle information generator generating vehicle information comprising at least one of a vehicle location, a vehicle speed and a vehicle direction based on current location information of the vehicle, a route information generator generating route information from an origin to a destination based on map data, a navigation information generator generating navigation information for a route guide from the origin to the destination based on the vehicle information and the route information, a main display for displaying the navigation information, a concise navigation information generator generating concise navigation information comprising at least one of a left-turn direction, a right-turn direction, a go-straight direction and a U-turn direction based on the navigation information, and an auxiliary display for displaying the concise navigation information separate from the main display.

Preferably, the auxiliary display comprises inputting means disposed along a circumference of the auxiliary display. Preferably, at least one of an upward direction, a downward direction, a left direction and a right direction can be inputted into the vehicle navigation system using the inputting means. Preferably, the vehicle navigation system further comprises a viewing angle adjusting means formed between the main display and the auxiliary display for adjusting an angle of the auxiliary display with respect to the main display.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

Fig. 1 is a front view of a navigation system, in accordance with an embodiment of the present invention.

Fig. 2 is a diagram illustrating a direction indicator of an auxiliary display screen, in accordance with an embodiment of the present invention.

Fig. 3 illustrates adjusting a viewing angle of an auxiliary display, in accordance with an embodiment of the present invention.

Fig. 4 is a diagram exemplifying a screen of a main display and an auxiliary display, in accordance with an embodiment of the present invention.

Fig. 5 is a diagram illustrating an assembly exemplifying a main display and an auxiliary display, in accordance with an embodiment of the present invention.

Fig. 6 is a diagram exemplifying a navigation system installed in a vehicle, in accordance with an embodiment of the present invention.

Fig. 7 is a block diagram illustrating a navigation system, in accordance with an embodiment of the present invention.

### DETAILED DESCRIPTION OF THE PREFERRED EMBODIMENTS

The present invention relates to a vehicle navigation system capable of providing navigation information through an auxiliary display. The present invention will now be described in detail with reference to the accompanied drawings.

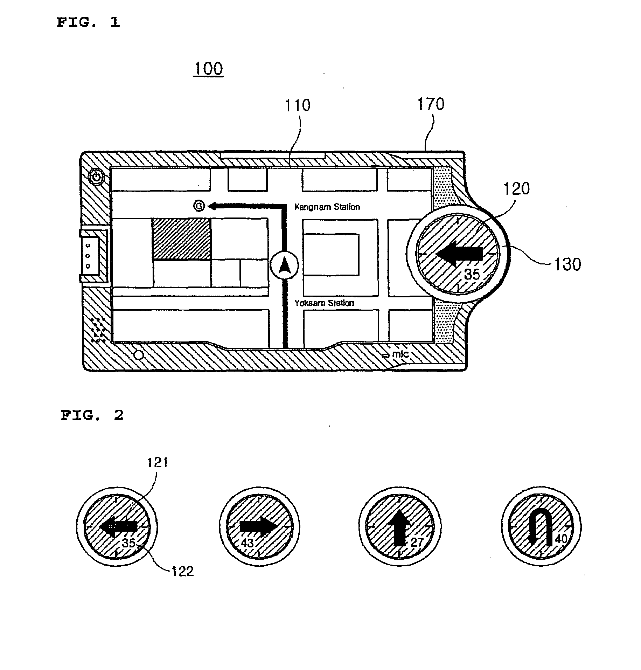

Fig. 1 is a front view of a navigation system 100 in accordance with an embodiment of the present invention. Preferably, the navigation system 100 comprises a main display 110 and an auxiliary display 120 operationally coupled to the main display 110.

Preferably, the main display 110 provides navigation information including a location, speed and direction of a vehicle according to a navigation mode similar to a conventional navigation system. The navigation information also includes a route for guiding a driver to a desired destination. The main display 110 is generally disposed on a front surface of a case 170 of the navigation system 100 and may be embodied using a liquid crystal display (LCD). The main display 110 may provide a navigation screen, including features such as a vicinal map screen, a current location of the vehicle, a current direction of the vehicle and a recommended route in the navigation mode.

In case the navigation system 100 is capable of multimedia playback or broadcast reception, the main display 110 may also provide a corresponding multimedia playback screen or broadcast reception screen. The main display 110 may also provide other service screens for carrying out a corresponding function when a control function such as a menu selection or an environment configuration of the navigation system 100 is utilized. Functions other than a navigation function are referred to as "other functions" hereinafter.

As shown in Fig. 1, the auxiliary display 120 is disposed on a first side of the main display 110 to display a portion of the navigation information. The auxiliary display 120 includes at least one input device 130 for generating a control command in the navigation system 100 according to a user operation.

Fig. 2 exemplifies the portion of the navigation information displayed on the auxiliary display 120. Preferably, the information displayed on the auxiliary display 120 is limited to information essential to navigation, such that the navigation information is provided to a driver intuitively and promptly.

For example, information regarding a change in a driving route and a direction of the change is essential navigation information. Therefore, it is preferable that the auxiliary display 120 displays a driving direction indicator 121 to indicate at least the following navigation directions: left-turn, right-turn, go-straight and U-turn. In addition, the auxiliary display 120 preferably displays a remaining distance 122 to a point at which the driving route changes according to the driving direction indicator 121. Thus, the driver may promptly recognize the driving route.

In accordance with the present invention, the driving direction indicator 121 is not limited to providing left-turn, right-turn, go-straight and U-turn directions. The driving direction indicator 121 may visually provide additional information necessary for driving such as speed limit information and frequent car accident region information, for example. In addition, the driver may be alerted by blinking the information displayed on the auxiliary display 120.

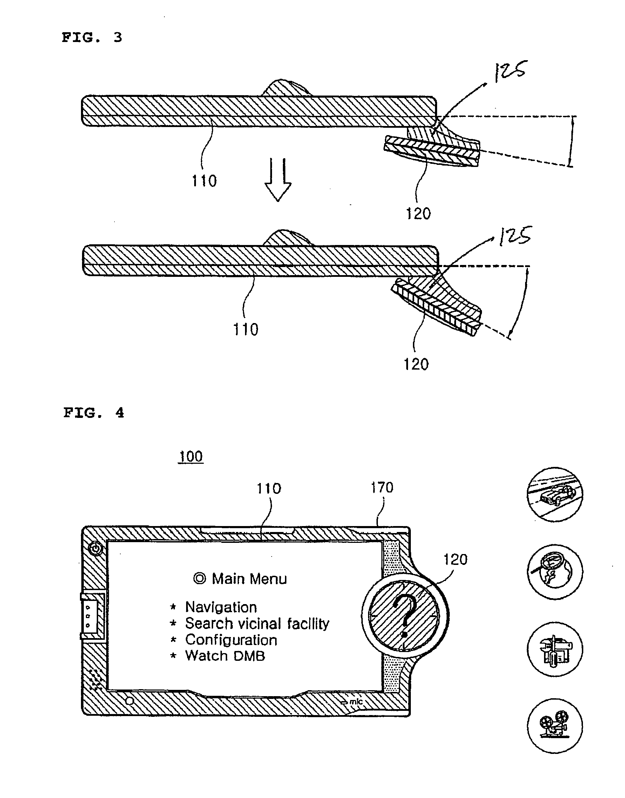

Referring to Fig. 4, the auxiliary display 120 may be configured to display a pictogram for visually displaying a menu in a menu selection mode of the navigation system 100. Through the pictogram, the user may intuitively understand the menu of the navigation system 100 to improve operability thereof, and prevent distractions that may occur during menu operation while driving.

Furthermore, the auxiliary display 120 preferably includes the input device 130 for operating the navigation system 100 as well as providing the display function. Accordingly, this prevents a problem of the conventional navigation system wherein the input means is separately disposed from the display screen, thus causing the driver to be distracted when moving his field of vision from the input means to the display screen during operation.

In accordance with an embodiment of the present invention, movement of the driver's field of vision is minimized because the field of vision of the driver is not changed during the operation of the navigation system via the input device 130 and checking the driving route via the auxiliary display 120. In accordance with the present invention, the input device 130 may be embodied in various ways. For instance, inputting means may be disposed along a circumference of the auxiliary display 120 for inputting an upward direction, a downward direction, a left direction and a right direction. The auxiliary display 120 may be a dial or a jog, by configuring the auxiliary display 120 to be rotatable, or the auxiliary display 120 may operate as a switch, for example.

Fig. 3 illustrates adjusting a viewing angle of the auxiliary display 120 in accordance with an embodiment of the present invention. Referring to Fig. 3, the auxiliary display 120 is preferably disposed on a first side of the main display 110 via a viewing angle adjusting mechanism 125 for adjusting an angle with respect to the main display 110. The viewing angle adjusting mechanism 125 may be embodied using a bearing or a hinge, and capable of adjusting the angle while maintaining an electrical connection between the auxiliary display 120 and the navigation system 100. In accordance with one embodiment, the main display 110 may be installed to face a passenger, and the auxiliary display 120 may be adjusted to face the driver to maximize the driver's view thereof and minimize any distractions caused by the main display 110.

Preferably, when a user wishes to use other services on the navigation system 100, such as watching a broadcast or performing multimedia playback, during the navigation mode, the main display 110 may be switched to a screen for the other services and the auxiliary display 120 may be configured to continuously provide navigation information such as the driving direction indicator 121. In accordance with one embodiment, the other services may be selectively provided to the passenger while driving.

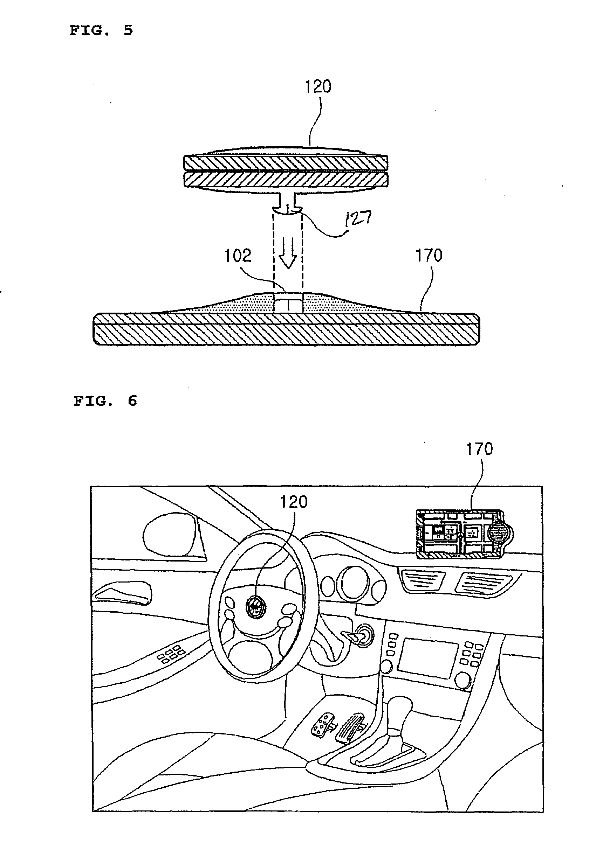

Fig. 5 illustrates an example wherein the auxiliary display 120 is configured to be detachable from the case 170, in accordance with an embodiment of the present invention. Preferably, the auxiliary display 120 comprises a joint 127 for detachably attaching the auxiliary display 120 to the case 170 including the main display 110. Preferably, the navigation system 100 includes at least one receptacle 102 on a surface of the case 170 for accommodating the joint 127 of the auxiliary display 120.

In one aspect of the invention, the auxiliary display 120 further comprises a wireless communication interface means for communicating with the navigation system 100 when detached from the case 170. The auxiliary display 120 may further comprise a storage means for storing navigation data or programs for upgrading the navigation system 100. Preferably, the auxiliary display 120 may communicate with other electronic devices, such as a personal computer (PC), personal digital assistant (PDA), mobile phone, and the like, for uploading and downloading data between the auxiliary display 120 and the electronic device.

Fig. 6 is a diagram exemplifying a navigation system installed in a vehicle, in accordance with an embodiment of the present invention. Referring to Fig. 6, because the auxiliary display 120 is capable of wirelessly communicating with the navigation system 100, the auxiliary display 120 may be detached from the navigation system 100 and attached to a portion of the vehicle that minimizes movement of the driver's field of vision. For example, the auxiliary display 120 may be attached to an A-pillar of the vehicle or at a center of a steering wheel, as shown in Fig. 6.

In accordance with an embodiment of the present invention, because the auxiliary display 120 comprises a storage means, the auxiliary display 120 may be detached separately and transported out of the vehicle to upload/download data onto/from a PC, or download programs for upgrading the navigation system, for example, without removing the entire navigation system 100 from the vehicle. Accordingly, any new data stored in the auxiliary display 120 while separated may easily be provided to the navigation system 100 after reconnecting with the navigation system 100.

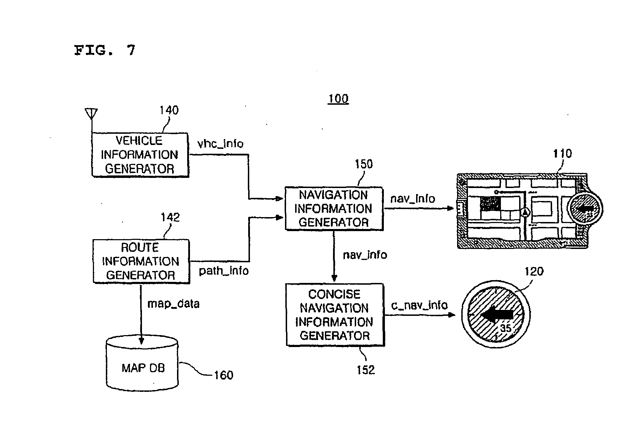

Fig. 7 is a block diagram illustrating an internal configuration of the navigation system in accordance with an embodiment of the present invention. Preferably, the navigation system 100 comprises a vehicle information generator 140, a route information generator 142, a navigation information generator 150, a concise navigation information generator 152, the main display 110 and the auxiliary display 120.

The vehicle information generator 140 generates vehicle information (vhc_info) including a location, speed and direction of the vehicle based on current location information of the vehicle obtained by receiving GPS information from a GPS satellite. The route information generator 142 generates route information (path_info) from an origin to a destination based on map data (map_data) from a map database 160. The navigation information generator 150 generates navigation information (nav_info) for a route guide to the destination based on the vehicle information (vhc_info) and the route information (path_info). The generated navigation information (nav_info) is provided to the driver through the main display 110.

The concise navigation information generator 152 generates concise navigation information (c_nav_info) including at least the left-turn, right-turn, go-straight and U-turn directions based on the navigation information (nav_info). Preferably, the concise navigation information (c_nav_info) is provided to the user via the auxiliary display 120 separate from the main display 110.

As described above, the navigation system of the present invention comprises the auxiliary display separate from the main display such that the main display provides a typical navigation screen and the auxiliary display provides information essential to navigation, such as left-turn, right-turn, go-straight and U-turn directions, thereby preventing distraction of the driver.

In accordance with the navigation system of the present invention, the auxiliary display comprises an input device for generating a control command for the navigation system. This allows the driver navigated by the auxiliary display to operate the navigation system without moving his field of visions, thereby preventing distraction.

In accordance with the navigation system of the present invention, the auxiliary display comprises a viewing angle adjusting mechanism for adjusting an angle of the auxiliary display with respect to the main display. Accordingly, the driver may see the auxiliary display even when the driver cannot see the main display. Thus, the driver can be provided with navigation information while a passenger independently uses other services for broadcast viewing or multimedia playback.

In accordance with the navigation system of the present invention, the auxiliary display is detachably attached to its case. Moreover, the auxiliary display provides concise navigation information to the driver through a wireless communication interface when detached from the case. Accordingly, the auxiliary display may be separated from the navigation system and attached to a portion of the vehicle that minimizes the driver's field of vision movement. This includes a center of a steering wheel or an A-pillar of the vehicle.

Finally, in accordance with the navigation system of the present invention, because the detachable auxiliary display comprises a storage means, the auxiliary display may be detached separately and transported out of the vehicle to upload/download data onto/from a PC, or download programs for upgrading the navigation system, for example, without removing the entire navigation system from the vehicle. Furthermore, any new data stored in the auxiliary display while separated may easily be provided to the navigation system after reconnecting with the navigation system.

While the present invention has been particularly shown and described with reference to the preferred embodiment thereof, it will be understood by those skilled in the art that various changes in form and details may be effected therein without departing from the spirit and scope of the invention.

## Claims

1. A vehicle navigation system, comprising:
a main display providing navigation information comprising at least one of a vehicle location, a vehicle speed, a vehicle direction and a driving route for guiding a driver to a desired destination;
an auxiliary display disposed at a side of the main display displaying a portion of the navigation information; and
at least one input means formed on the auxiliary display for receiving a user input to control the vehicle navigation system.

2. The vehicle navigation system of claim 1, further comprising a viewing angle adjusting means formed between the main display and the auxiliary display for adjusting an angle of the auxiliary display with respect to the main display.

3. The vehicle navigation system of claim 1, wherein the auxiliary display comprises a driving direction indicator for indicating a direction to the driver.

4. The vehicle navigation system of claim 3, wherein the driving direction indicator indicates at least one of:
a left-turn direction;
a right-turn direction;
a go-straight direction; and
a U-turn direction.

5. The vehicle navigation system of claim 3, wherein the auxiliary display displays a remaining distance to a point at which the driving route changes according to the driving direction indicator.

6. The vehicle navigation system of claim 1, wherein the at least one input means comprises inputting means disposed along a circumference of the auxiliary display.

7. The vehicle navigation system of claim 6, wherein at least one of an upward direction, a downward direction, a left direction and a right direction can be inputted into the vehicle navigation system using the inputting means.

8. The vehicle navigation system of claim 1, wherein the auxiliary display displays a pictogram for visually displaying a menu when the navigation system is in a menu selection mode.

9. The vehicle navigation system of claim 1, wherein the main display displays non-navigation-related information when non-navigation functions are activated in the navigation system during a navigation mode.

10. The vehicle navigation system of claim 9, wherein the auxiliary display displays the portion of the navigation information when the non-navigation functions are activated in the navigation system during the navigation mode.

11. The vehicle navigation system of claim 1, wherein the auxiliary display comprises means for detachably attaching to the main display.

12. The vehicle navigation system of claim 11, wherein the main display comprises a receptacle for accommodating the attaching means of the auxiliary display.

13. The vehicle navigation system of claim 11, wherein the auxiliary display comprises a wireless communication interface for wirelessly communicating with the main display when detached.

14. The vehicle navigation system of claim 11, wherein the auxiliary display comprises a storage for storing data.

15. A vehicle navigation system, comprising:
a vehicle information generator generating vehicle information comprising at least one of a vehicle location, a vehicle speed and a vehicle direction based on current location information of the vehicle;
a route information generator generating route information from an origin to a destination based on map data;
a navigation information generator generating navigation information for a route guide from the origin to the destination based on the vehicle information and the route information;
a main display for displaying the navigation information;
a concise navigation information generator generating concise navigation information comprising at least one of a left-turn direction, a right-turn direction, a go-straight direction and a U-turn direction based on the navigation information; and
an auxiliary display for displaying the concise navigation information separate from the main display.

16. The vehicle navigation system of claim 15, wherein the auxiliary display comprises inputting means disposed along a circumference of the auxiliary display.

17. The vehicle navigation system of claim 16, wherein at least one of an upward direction, a downward direction, a left direction and a right direction can be inputted into the vehicle navigation system using the inputting means.

18. The vehicle navigation system of claim 15, further comprising a viewing angle adjusting means formed between the main display and the auxiliary display for adjusting an angle of the auxiliary display with respect to the main display.
